# EUROPEAN PATENT SPECIFICATION

(11) **EP 3 164 480 B1**
(45) Date of publication and mention of the grant of the patent: **02.05.2018**
(21) Application number: 15753187.2
(22) Date of filing: 06.07.2015
(51) Int. Cl.: C12G 1/02

(54) **IMPROVED PNEUMATIC PUNCHING DOWN DEVICE FOR WINE-MAKING**
VERBESSERTE PNEUMATISCHE STANZVORRICHTUNG ZUR WEINHERSTELLUNG
DISPOSITIF AMÉLIORÉ, PNEUMATIQUE DE PIGEAGE POUR LA FABRICATION DU VIN

(30) Priority: 04.07.2014 IT PO20140004
(43) Date of publication of application: 10.05.2017
(73) Proprietor: Parsec S.r.l., 50132 Firenze (IT)
(72) Inventor: FLORIDIA, Giuseppe, 50132 Firenze (IT)
(74) Representative: Martini, Riccardo
(86) International application number: PCT/IB2015/055110
(87) International publication number: WO 2016/001906

(56) References cited:
- EP-A1- 0 347 487
- EP-A1- 1 454 979
- FR-A1- 2 952 647
- US-A1- 2006 156 929
- US-A1- 2014 170 263

## Description

### Technical field

This invention relates to an improved pneumatic punching down device for wine making.

### Prior art

It is known that during the fermentation of grapes, the grape skins float to the top of the fermenting must and form a solid layer which is known as cap.

It is also known that to facilitate maceration of the substances contained in the cap and in the seeds (which, on the contrary, tend to sink to the bottom), two basic mechanical mixing techniques are used: namely, pumping over and punching down.

More specifically, punching down involves applying mechanical pressure on the cap from above - using a piston provided with a pushing element such as a plate or the like - until the cap breaks up and sinks into the must below it either whole or piece by piece. A known device for punching down must is described, for example, in EP0916723. Known punching down devices suffer from several drawbacks such as the high wear rate of the piston on account of corrosion caused by aggressive substances in the must and transversal stresses, the limited possibility of adjusting not only the distance between the pusher plate and the cap but also the punching down stroke, and the limited efficacy of the pusher plate.

### Disclosure of the invention

This invention therefore has for an aim to provide an improved punching down device which overcomes the above mentioned drawbacks.

This aim is achieved by a punching down device according to the accompanying claims, bringing considerable advantages which, together with the features of the invention, are more apparent from the following detailed description of a preferred but non-limiting embodiment of it.

### Brief description of the drawings

In the drawings:
- Figures 1a and 1b are schematic front views of a punching down device according to a preferred embodiment of the invention;
- Figure 2 is a schematic perspective view of the pneumatic system of the preferred embodiment of the punching down device illustrated;
- Figure 3 is a top plan view of the pusher plate of the punching down device.

### Embodiments of the invention

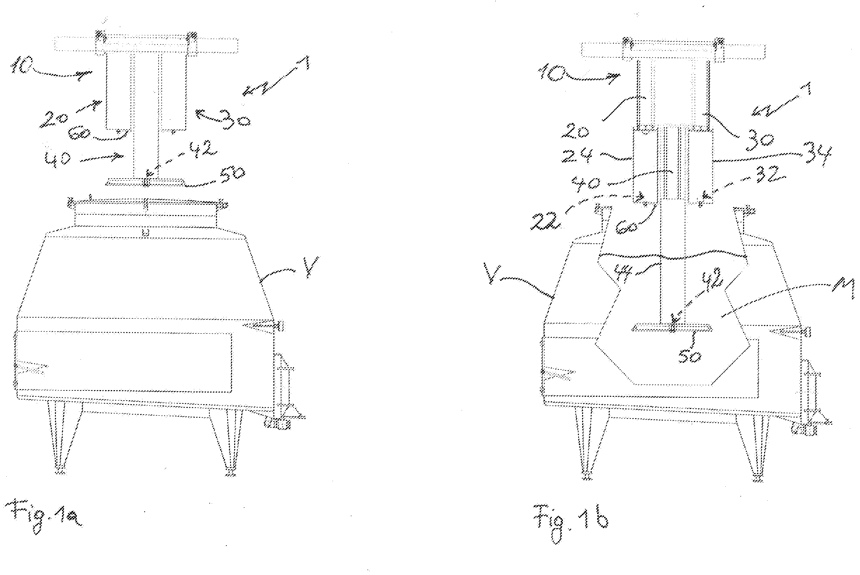

Figures 1a and 1b illustrate a punching down device 1 operating inside a tank V containing must M. The punching down device comprises means 10, described in more detail below, for the vertical support of a first pneumatic cylinder 40 provided with a pusher element 50 applied to the lower end of its stem 42.

According to the invention, a protective wall 44 for protecting the stem 42 of the cylinder 40 is provided which is integral with the stem 42 itself, extends vertically and is closed at the bottom. The protective wall 44 - which isolates the stem 42 from the marc and from the must M when the pusher element 50 is pushed into the tank V - may have a circular transversal cross section (as in the example illustrated), a square one or one of any other shape.

In the preferred embodiment illustrated, the first pneumatic cylinder 40 is rigidly connected by a frame 60 to the stems 22,32 of two additional lateral pneumatic cylinders 20,30, so that driving these causes the first pneumatic cylinder 40 to be vertically displaced.

Protections 24,34, similar to the protection 44 of the stem 42 of the first cylinder 40 are advantageously provided around the stems 22,32 of the lateral cylinders 20,30.

The protections of the stems of the pneumatic cylinders are made preferably of stainless steel and are closed at the bottom and therefore perfectly sealed.

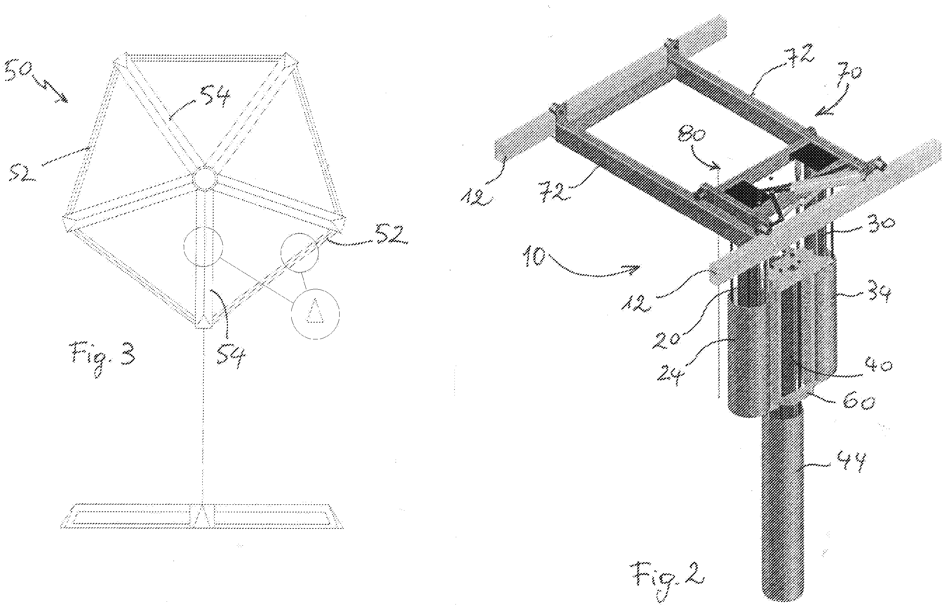

With reference to Figure 2, the supporting means 10 of the first cylinder 40 comprise a pair of parallel beams 12 for supporting and guiding a first carriage 70 comprising a pair of crossbeams 72 on which there is a second, moving carriage 80.

Rigidly connected to the second carriage 80 there are two lateral pneumatic cylinders 20,30

The two carriages 70, 80 evidently allow moving and centring the punching down device on the same tank or on adjacent tanks.

Figure 3 shows a preferred embodiment of the pusher element 50 adapted to prevent the formation of dregs and comprising a polygonal, annular part 52 and a plurality of connecting elements 54 arranged radially. Advantageously, both the annular part 52 and the connecting elements 54 have a triangular cross section with an upwardly directed vertex.

A punching down device according to the invention offers many advantages.

First of all, protecting the pneumatic cylinder stem makes it possible to safeguard the stem against contamination and transversal stresses.

In effect, the sealed protection prevents the must from being contaminated by lubricant leaking from the pneumatic cylinder and by other oily substances from the compressor. Any possible leaks collect inside the sealed protection and are prevented from reaching the must.

The protection against the corrosive actions of the must, of the chemical substances contained therein, of the water and of the products used to clean the machine after it has been used also allows substantial elimination of the main causes of cylinder stem and seal wear.

Also, greater stability is obtained thanks to less vibrational stress at the guide supports during the continual load variations

A further advantage determined by the protection of the piston stem is the possibility of keeping the punch plate submerged in the must when the plate is at rest. Thanks to the CO₂ produced by the fermentation process, this prevents the formation of microorganisms, moulds and gnats and other impurities which would spoil the product during fermentation.

The preferred embodiment of the invention illustrated offers further advantages.

In effect, thanks to the two lateral pneumatic cylinders 20,30, it is possible to adjust the height of the first pneumatic piston 40 and of the pusher element 50 in such a way as to position the latter inside the tank at the ideal distance from the cap.

Also, driving the first pneumatic cylinder 40 allows moving the pusher element 50 in such a way as to effectively drive the marc into the liquid , thereby optimizing the effective punching stroke.

This special type of drive makes it possible, at an adjustable speed of movement, to reach and submerge the entire cap well under the surface of the liquid must.

The special structure of the twin-body pneumatic system allows obtaining a compact device capable of extending from approximately 120 cm in the closed position to 280 cm in the open position.

Further, the punching down device of this invention, with its three stainless steel cylinders and gap-free frame, can be cleaned easily and effectively.

Moreover, the shape of the pusher plate and the triangular cross section of its component elements prevent the pusher plate, during the upstroke after it has pushed a portion of the cap down into the liquid, from carrying back to the surface a certain quantity of the marc which, besides hampering the upward stroke, would lead to problems during the pause and movement of the punching down device from one fermentation tank to another.

A punching down device according to the invention can be applied to stainless steel fermentation vats, cement tanks and frustoconical vats made of wood or other material. Installation may be in a fixed position, on top of individual tanks, or movable on rails to serve a line of tanks, as in the example illustrated.

## Claims

1. A punching down device for marc emerging from must (M) in fermentation inside a tank (V), the device comprising means (10) for the vertical support of a first pneumatic cylinder (40) provided with a pusher element (50) applied to the lower end of its stem (42) and adapted to push the marc into the must, **characterized in that** a protective wall (44), closed at the bottom, is provided integral with said stem (42) so as to prevent contact with the marc and the must.

2. The punching down device according to claim 1, wherein said first pneumatic cylinder (40) is rigidly connected to the stems (22,32) of two additional lateral pneumatic cylinders (20,30), so that the drive of these causes the vertical displacement of the first pneumatic cylinder (40).

3. The punching down device according to claim 2, wherein watertight walls (24,34) are provided for protection of the stems (22,32) of said additional cylinders (20,30).

4. The punching down device according to any one of the preceding claims, wherein said supporting means (10) comprise a pair of parallel beams (12) for supporting and guiding a first carriage (70) comprising a pair of crossbeams (72) for a second moving carriage (80), to which are rigidly connected the two lateral pneumatic cylinders (20,30).

5. The punching down device according to any one of the preceding claims, wherein said pusher element (50) comprises a polygonal annular part (52) and a plurality of connecting elements (54) arranged radially.

6. The punching down device according to claim 5, wherein both the annular part (52) and the connecting elements (54) have a triangular section with a vertex facing upwards.

## Patentansprüche

1. Vorrichtung zum Herunterdrücken von bei der Gärung im Inneren eines Tanks (V) aus der Maische (M) austretendem Trester, wobei die Vorrichtung Mittel (10) für das vertikale Stützen eines ersten pneumatischen Zylinders (40) umfasst, der mit einem Schieberelement (50) vorgesehen ist, das am unteren Ende seines Schafts (42) angebracht und so eingerichtet ist, dass es den Trester in die Maische schiebt, **dadurch gekennzeichnet, dass** eine mit dem Schaft (42) einstückig ausgebildete, an der Unterseite geschlossene Schutzwand (44) vorgesehen ist, um einen Kontakt mit dem Trester und der Maische zu verhindern.

2. Vorrichtung zum Herunterdrücken nach Anspruch 1, wobei der erste pneumatische Zylinder (40) mit den Schäften (22, 32) von zwei zusätzlichen lateralen pneumatischen Zylindern (20, 30) starr verbunden ist, so dass deren Antrieb die vertikale Verschiebung des ersten pneumatischen Zylinders (40) bewirkt.

3. Vorrichtung zum Herunterdrücken nach Anspruch 2, wobei zum Schutz der Schäfte (22, 32) der zusätzlichen Zylinder (20, 30) wasserdichte Wände (24, 34) vorgesehen sind.

4. Vorrichtung zum Herunterdrücken nach einem der vorstehenden Ansprüche, wobei die Stützmittel (10) ein Paar paralleler Träger (12) zur Stützung und Steuerung eines ersten Schlittens (70) umfassen, die ein Paar Querträger (72) für einen zweiten sich bewegenden Schlitten (80) umfassen, mit dem die beiden lateralen pneumatischen Zylinder (20, 30) starr verbunden sind.

5. Vorrichtung zum Herunterdrücken nach einem der vorstehenden Ansprüche, wobei das Schieberelement (50) ein polygonales ringförmiges Teil (52) und eine Vielzahl radial angeordneter Verbindungselemente (54) umfasst.

6. Vorrichtung zum Herunterdrücken nach Anspruch 5, wobei sowohl das ringförmige Teil (52) als auch die Verbindungselemente (54) einen dreieckigen Abschnitt mit einem nach oben zeigenden Scheitelpunkt aufweisen.

## Revendications

1. Dispositif de pigeage pour le marc émergeant d'un moût (M) en fermentation à l'intérieur d'une cuve (V), le dispositif comprenant un moyen (10) pour le support vertical d'un premier vérin pneumatique (40) pourvu d'un élément poussoir (50) appliqué sur l'extrémité inférieure de sa tige (42) et adapté pour pousser le marc dans le moût, **caractérisé en ce qu'**une paroi protectrice (44), fermée au niveau du fond, est fournie intégrée à ladite tige (42) pour éviter un contact avec le marc et le moût.

2. Dispositif de pigeage selon la revendication 1, dans lequel ledit premier vérin pneumatique (40) est solidarisé aux tiges (22, 32) de deux vérins pneumatiques latéraux supplémentaires (20, 30), de sorte que l'actionnement de celles-ci amène le déplacement vertical du premier vérin pneumatique (40).

3. Dispositif de pigeage selon la revendication 2, dans lequel des parois étanches à l'eau (24, 34) sont fournies pour la protection des tiges (22, 32) desdits vérins supplémentaires (20, 30).

4. Dispositif de pigeage selon l'une quelconque des revendications précédentes, dans lequel ledit moyen de support (10) comprend une paire de poutres parallèles (12) pour supporter et guider un premier chariot (70) comprenant une paire de traverses (72) pour un second chariot mobile (80), auquel sont solidarisés les deux vérins pneumatiques latéraux (20, 30).

5. Dispositif de pigeage selon l'une quelconque des revendications précédentes, dans lequel ledit élément poussoir (50) comprend une partie annulaire polygonale (52) et une pluralité d'éléments de connexion (54) agencés de manière radiale.

6. Dispositif de pigeage selon la revendication 5, dans lequel à la fois la partie annulaire (52) et les éléments de connexion (54) présentent une section triangulaire avec un sommet tourné vers le haut.
